# EUROPEAN PATENT APPLICATION

(11) **EP 4 414 221 A1**
(43) Date of publication of application: **14.08.2024**
(21) Application number: 24156533.2
(22) Date of filing: 08.02.2024
(51) Int. Cl.: B60R 13/10

(54) **LICENCE PLATE HOLDER DEVICE**

(30) Priority: 08.02.2023 IT 202300002094; 08.02.2023 IT 202300002100; 19.10.2023 IT 202300021789
(71) Applicant: Gentili, Riccardo, 00040 Ariccia (RM) (IT)
(72) Inventor: Gentili, Riccardo, 00040 Ariccia (RM) (IT)
(74) Representative: Mulas, Chiara

(57) **Abstract**

The present invention concerns a license plate holder device (1) including a main body (2), on which a plurality of through holes (140) are obtained, said main body (2) being adapted to be anchored to a vehicle and to support a license plate (T), said main body (2) having a first main development direction parallel to a first axis (x) and a second main development direction parallel to a second longitudinal axis (y), perpendicular to said first axis (x), said first axis (x) and second axis (y) defining a first plane (xy), said license plate holder device (1) including a plurality of locking devices (14; 24), adapted to couple by interlocking with the respective through hole (140) on said main body (2) to rigidly constrain said license plate (T) to said license plate holder device (1). Said license plate holder device (1) is characterized in that each of said locking devices (14; 24) has a gripping portion (14') and a locking portion (14"), connected to each other at a breaking edge (140'), wherein said breaking edge (140') has a cross section with a thickness smaller than said gripping (14') and locking (14") portions such that, during use, when the locking portion (14") is coupled by interlocking with the respective through hole (140) of said main body (2) through the action on said gripping portion (14'), said breaking edge (140') breaks, leaving the remaining body of the locking device (14) in place on said main body.

## Description

The present invention concerns a license plate holder device for vehicles, in particular for cars, adapted to the application of an identification license plate by the vehicle manufacturer itself, easily and directly at the time of installation of the device.

More precisely, the present invention concerns a license plate holder device, preferably made of plastic material, adapted to fix a license plate of a vehicle, in particular a motor vehicle, thereon.

In the state of the art, license plate holder devices are known which consists of a main body, typically made of plastic material, usually with a profile that resembles that of the license plate for which it is designed, with a rectangular shape having a surface for fixing the vehicle license plate, adapted to couple with the vehicle bodywork, and an external surface, opposite to the fixing surface, on which the license plate is rigidly coupled using locking elements, such as for example screws and bolts.

Furthermore, these devices are designed to be applied directly by the vehicle manufacturing company onto the vehicle itself, without requiring the action of a specialized operator or laborious installation processes, with the aim of not being removed once installed, thus allowing the application of advertising/commercial information regarding the manufacturer of the vehicle on which the device is installed.

In the license plate holder devices known in the state of the art, in said main body there are openings or slots, adapted for the insertion of locking elements which can be placed in correspondence with at least two of said slots, allowing the license plate to be fixed to a license plate holder device. However, these state-of-the-art locking devices realize reversible connections, for example through the use of simple snap or threaded buttons, thus allowing the license plate itself to be removed, and in certain cases, replaced by third parties.

The aim of the present invention is to overcome the issues highlighted in the prior art, in particular to realize a license plate holder device having an irreversible license plate - license plate holder device connection, thanks to which it is possible to fix a license plate during the installation of the license plate holder device on the vehicle bodywork, such that said license plate cannot be easily removed once installed on said vehicle.

It is an object of the present invention a license plate holder device including a main body on which a plurality of through holes are obtained, said main body being adapted to be anchored to a vehicle and to support a license plate, said main body having a first main development direction parallel to a first axis and a second main development direction parallel to a second longitudinal axis, perpendicular to said first axis, said first and second axes defining a first plane. Said license plate holder device including a plurality of locking devices, adapted to couple by interlocking with the respective through hole on said main body to rigidly constrain said license plate to said license plate holder device, said license plate holder device being characterized in that each of said locking devices has a gripping portion and a locking portion, connected to each other at a breaking edge, wherein said breaking edge has a cross section with a thickness smaller than said gripping and locking portions such that, during use, when the locking portion is coupled by interlocking with the respective through hole of said main body through the action on said gripping portion, said breaking edge breaks, leaving the remaining body of the locking device in place on said main body.

Furthermore, according to the invention, said at least one through hole of the main body can be an eccentric through hole, wherein said locking portion of each locking device can have a stem culminating in a large head and a tooth protruding relative to said stem adapted to be inserted into said eccentric through hole.

In particular, according to the invention, in correspondence with the rear face of said main body, for each eccentric hole, at least one abutting element can be arranged adjacent to the respective eccentric hole and a ramp having a semi-helicoidal development arranged on the opposite side of said eccentric hole and spaced therefrom by an interspace such that, during use, when said locking portion is inserted into said eccentric hole, through the rotation of the stem said protruding tooth slides on said ramp until it fits into said interspace.

More particularly, according to the invention, said protruding tooth of each locking device can have a chamfered portion to facilitate sliding on said ramp.

Still according to the invention, the distance between the base of the ramp and the abutting element, in correspondence with each eccentric hole on said main body, can be less than the distance between the apex of the ramp and the abutting element, in particular the distances can be equal.

Again according to the invention, said breaking edge can be equivalent to between 20% - 25% of the section of said stem.

Furthermore, according to the invention, said gripping portion can have a substantially two-dimensional and flat gripping surface, wherein said gripping surface can have at least two reinforced gripping edges, having a thickness greater than that of said gripping surface.

Preferably according to the invention, said ramp can have a semi-circular shape, in particular an arc of a circle having an angle of 180° degrees, and said abutting element can be arranged parallel and opposite, relative to said eccentric hole, to said initial and terminal edges of said ramp.

Again according to the invention, in the license plate holder device in correspondence with the rear face of said main body, for each eccentric hole, it is possible to further arrange a second abutting element adjacent to the respective eccentric hole, having a projecting portion placed above said second abutting element, oriented parallel to said first plane of said main body and facing and projecting onto said eccentric hole, and said locking device can further provide a contiguous protrusion perpendicular to said tooth and parallel to said stem of said locking device, adapted to create a substantially "L"-shaped end portion, so that, during use when said locking portion of said locking device is inserted into said eccentric hole, said substantially "L"-shaped end portion can abut with the projecting portion of said second abutting element when said protruding tooth is fitted into said interspace.

Still according to the invention, in the license plate holder device in correspondence with the rear face of said main body, for each eccentric hole, it can be further arranged a depression having a quarter-helicoidal development arranged between said abutting element and said eccentric hole adapted to form with said ramp an arc of a circle having an angle of 270° degrees, and said locking device can further comprise a fin placed on said terminal portion of the stem, opposite and oriented parallel to said tooth, such that, during use, when said locking portion of said locking device is inserted into said eccentric hole, said fin, by rotation of the stem, can engage with said depression, to facilitate the sliding of said tooth on said ramp.

Furthermore, it is an object of the present invention a locking device as previously described.

Finally, it is an object of the present invention a method for installing a locking device on the main body of a license plate holder device as previously described, comprising the following sequential steps:
a1) arrangement of a license plate on the main body of the license plate holder device;
a) insertion of said locking portion of said locking device into the respective through hole on said main body abutting on said license plate;
b) rotation of said locking device by means of said gripping portion, to couple said locking portion by interlocking with said main body;
c) further rotation of said gripping portion until causing the separation of said gripping portion from said locking portion of said locking device, in correspondence with said breaking edge.

Furthermore, it is an object of the present invention a license plate holder device including a main body adapted to be anchored to a vehicle and to support a license plate, said main body having a first main development direction parallel to a first axis, wherein said main body provides a plurality of through holes, wherein said license plate holder device includes a plurality of anti-vibrating or anti-vibration devices, each anti-vibrating device being arranged in the respective through hole in correspondence with one face of said main body to reduce vibrations between said license plate holder device and said vehicle, wherein said anti-vibration device has a rigid body, adapted to be coupled to the respective through hole of said main body, and an elastic arm rigidly joined to said rigid body, in particular said anti-vibration device includes at least one elastic arm, at one end thereof and having its concavity facing towards one face of said main body.

Still according to the invention, said through hole on said main body can have a quadrangular shape and said rigid body of said anti-vibration device can have a cubic volume conforming to said through hole.

Again according to the invention, said rigid body of said anti-vibration device can provide two anchoring tabs to allow said anti-vibration device to be rigidly anchored to two opposite sides of said quadrangular hole of said main body.

Still according to the invention, said anti-vibration device can consists of two arms equal to each other rigidly joined to said rigid body at their common end, in particular so as to join the rigid portion of the anti-vibration device with a central portion of said elastic portion.

In particular, according to the invention, said anti-vibration device can include two elastic arms equal to each other rigidly joined to said rigid body at their common end, in particular so as to join the rigid portion of the anti-vibration device with a central portion of said elastic portion.

Furthermore, according to the invention, the elastic portion of said anti-vibration device can be shaped in the form of an arc of a circle.

Still according to the invention, said arms can be joined to said rigid portion of said anti-vibration device by means of a spacer.

The invention will now be described by way of illustration but not limitation, with particular reference to the drawings of the attached figures, in which:
Figure 1a shows a front perspective view of the license plate holder device according to the invention in a first embodiment;
Figure 1b shows a rear perspective view of the license plate holder device of Figure 1a;
Figure 1c shows a front view of the main body of the license plate holder device of Figure 1a;
Figure 1d shows a rear view of the main body of the license plate holder device of Figure 1a;
Figure 2a shows a perspective view of the locking device of the license plate holder device according to the invention in a first embodiment;
Figure 2b shows a bottom view of the locking device of Figure 2a;
Figure 2c shows a first side view of the locking device of Figure 2a;
Figure 2d shows a front view of the locking device of Figure 2a;
Figure 2e shows a second side view of the locking device of Figure 2a;
Figure 2f shows a rear view of the locking device of Figure 2a;
Figure 3 shows the detail III of the main body of the license plate holder device of Figure 1d; and
Figure 4 shows the detail IV of the main body of the license plate holder device of Figure 1b;
Figure 5 shows a front perspective view of the locking device inserted into the eccentric hole of the main body of the license plate holder device of Figure 1a;
Figure 6 shows a rear perspective view of the locking device inserted into the eccentric hole of the main body of the license plate holder device of Figure 1a during rotation by a user;
Figures 7 and 8 show two front perspective views of the locking device installed into the eccentric hole of the main body of the license plate holder device of Figure 1a on a license plate during rotation by a user;
Figure 9a shows a side view of the locking device according to a second embodiment;
Figure 9b shows a front view of the locking device of Figure 9a;
Figure 9c shows a rear view of the locking device of Figure 9a;
Figure 9d shows a top view of the locking device of Figure 9a;
Figure 9e shows a perspective view of the locking device of Figure 9a;
Figure 10 shows a rear perspective view of a detail of the main body of the license plate holder device according to a second embodiment;
Figure 11 shows a rear perspective view of a detail of the main body of the license plate holder device of Figure 10;
Figure 12 shows a front perspective view of a detail of the main body of the license plate holder device of Figure 10;
Figure 13 shows a front perspective view of the locking device of Figure 9a in a first step of insertion into the eccentric hole of the main body of the license plate holder device of Figure 10;
Figure 14 shows a front perspective view of the locking device of Figure 9a inserted into the eccentric hole of the main body of the license plate holder device of Figure 10 after rotation by a user;
Figures 15 - 18 show rear perspective views of different steps of insertion of the locking device of Figure 9a into the eccentric hole of the main body of the license plate holder device of Figure 10;
Figure 19a shows a perspective view of an anti-vibration device in a first embodiment of the license plate holder device of Figure 1a, to reduce vibrations with the vehicle on which it is arranged;
Figure 19b shows a bottom view of the anti-vibration device of Figure 19a;
Figure 19c shows a side view of the anti-vibration device of Figure 19a;
Figure 19d shows a top view of the anti-vibration device of Figure 19a;
Figure 19e shows a front view of the anti-vibration device of Figure 19a;
Figure 19f shows a rear view of the anti-vibration device of Figure 19a;
Figure 20a shows a perspective view of an anti-vibration device in a second embodiment of the license plate holder device of Figures 1a and/or 10, to reduce vibrations with the vehicle on which it is positioned;
Figure 20b shows a front view of the anti-vibration device of Figure 20a;
Figure 21 shows a detail of a front perspective view of the license plate holder device according to the invention wherein the anti-vibration device of Fig. 20a is inserted; and
Figure 22 shows a detail of a rear perspective view of the license plate holder device according to the invention wherein the anti-vibration device of Fig. 20a is inserted.

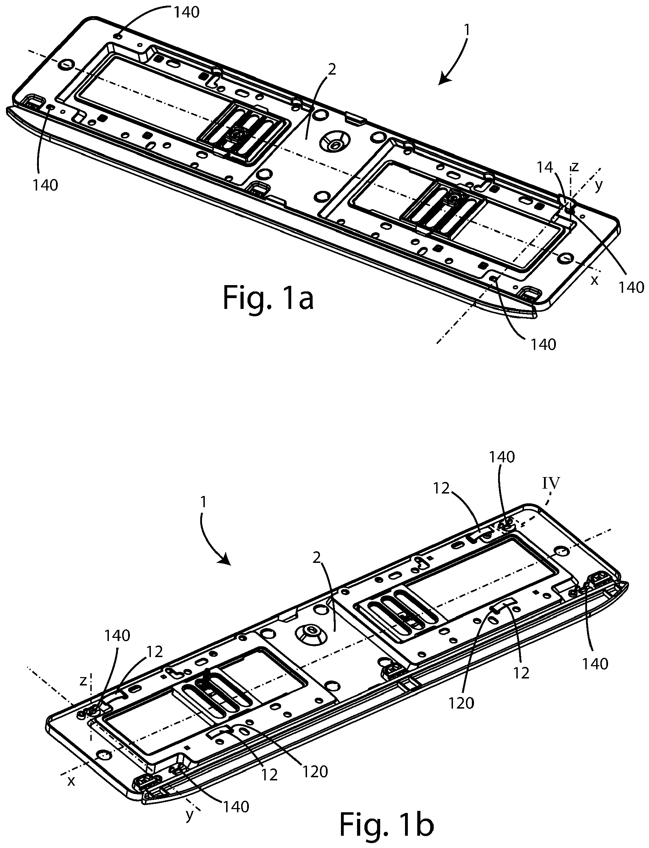

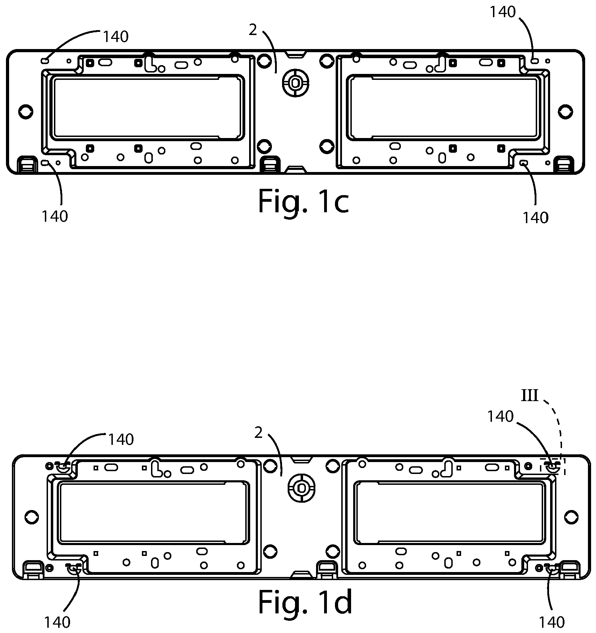

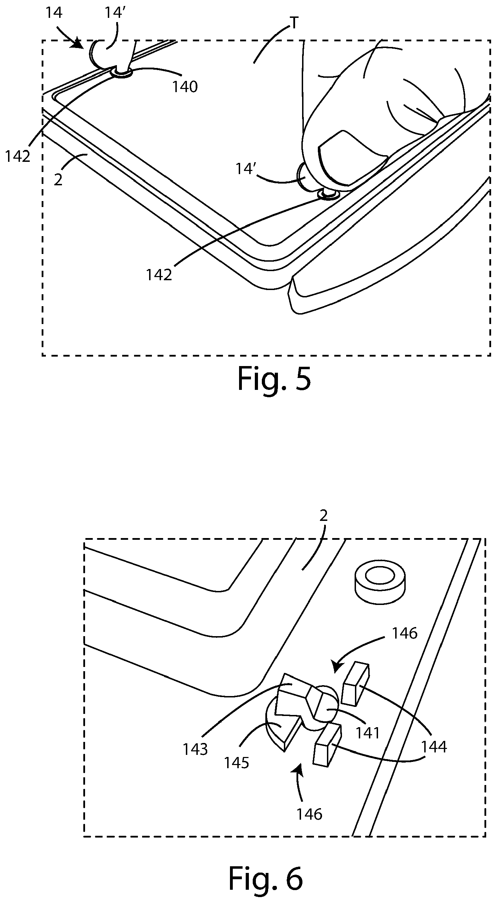

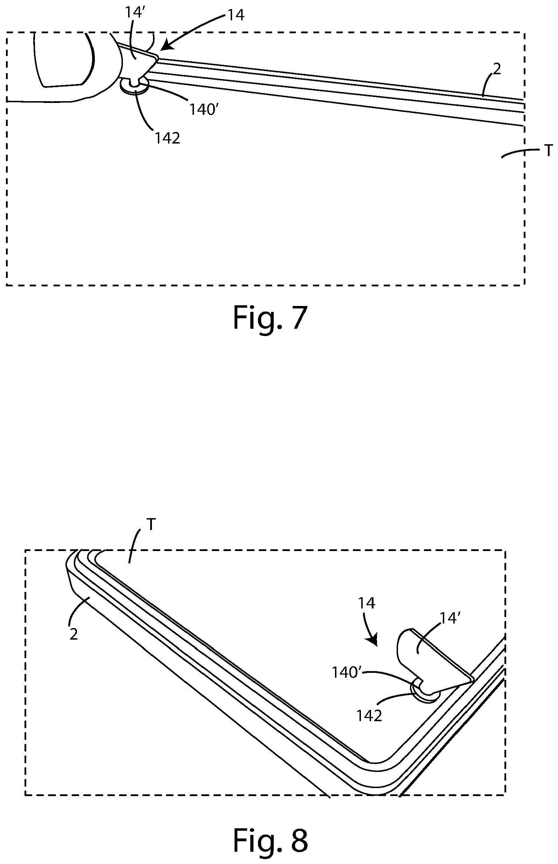

Referring to Figures 1a - 1d, a license plate holder device 1 can be observed in a first embodiment according to the invention for anchoring a license plate (indicated with the letter T in Figures 5 and 8) to said device 1, which is adapted to be fixed to the bodywork of a vehicle. This license plate holder device 1 is configured as an assembly of components which may also be separated from each other. Preferably the license plate holder device 1 is made of polymeric material.

In particular, in said figures it can be seen how said license plate holder device 1 includes a main body 2 with a front surface or face and a rear face, opposite to the front face, preferably with a flat rectangular shape as it resembles the shape of the license plate T to be installed and having as main directions two x and y axes perpendicular to each other and defining an xy plane of the main body 2, adapted to house a license plate T and any elements for anchoring it. In particular, the license plate holder device 1 includes a plurality of through holes 140 in correspondence with the main body 2 for installing a plurality of locking devices 14 to lock said license plate to said license plate holder device 1.

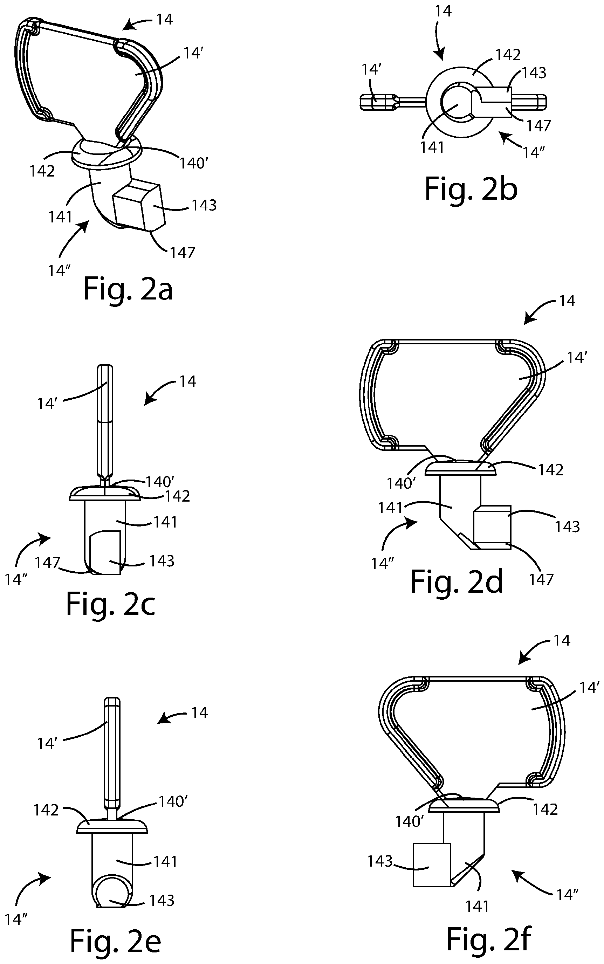

With reference to Figures 2a - 2f according to the invention, in a first embodiment, the use of said plurality of locking devices 14 for anchoring a license plate T to the license plate holder device 1, in correspondence with a corresponding number of through holes 140, is envisaged. By coupling the locking devices 14 on the main body 2 of the license plate holder device 1, placing the license plate T between the license plate holder device 1 and the main body 2, thus allowing the license plate T to be anchored on the license plate holder device 1.

Each of the locking devices 14 in fact includes a gripping portion 14' and a locking portion 14', joined together at a breaking edge 140', thus forming a continuous body before the installation of the locking device 14. Said breaking edge 140' also has a cross section having a thickness smaller than the two gripping 14' and locking 14" portions. This feature actually allows, during use of the locking device 14, when the locking portion 14" is coupled by interlocking with the main body 2 in correspondence with the through hole 140 abutting on a license plate T placed between the main body 2 and a portion of the locking device 14, following the action of a user on the gripping portion 14', the breaking edge 140' to break. Following this phenomenon, the locking portion 14" will remain anchored to the main body 2 and it will be possible to remove the gripping portion 14'.

More precisely, the type of anchoring created through the use of said locking devices 14 is an irreversible connection, thanks to the particular configuration of the locking device 14 itself. In fact, it is possible to identify a gripping portion 14', preferably having substantially the shape of a butterfly, connected to a stem (for example a cylindrical stem) 141 on whose terminal portion there may be a tooth 143, an element adapted to couple the locking device 14 with the main body 2, which form a locking portion 14". At the junction between these two portions, a breaking edge 140' can be identified, with a cross section smaller than the two portions mentioned above (in particular having a section comprised between 20% - 25% of the section of the stem 141), for facilitating its breaking and therefore allowing the use of said locking device 14 to be irreversible.

In practice during the installation of the locking device 14, for example manually and therefore advantageously easy and without requiring specific knowledge by an operator, when the locking portion 14" is inserted into the through hole 140 and fitted into it, for example following the application of a force on the side portions of the gripping portion 14', possibly reinforced with a portion with a greater thickness to improve its gripping and therefore its use, the deformation effect due to the applied force and the constraint reactions (in correspondence with the locking portion 14", in particular on the tooth 143) cause it to break in correspondence with the breaking edge 140', having a lower breaking resistance than the other portions of the locking device 14, since it has a smaller width.

This phenomenon advantageously makes it possible to obtain (as highlighted) a de facto irreversible coupling and consequently the impossibility (or extreme difficulty) by third parties, for example dealers, body shops who are not the original manufactures of the vehicle or unauthorized operators, of removing and/or replacing the license plate T.

In addition, between the stem 141 and the breaking edge 140' of the locking device 14, a convex head 142 can be provided, having a wider width than the stem 141, adapted to abut on the license plate T, remaining in place following the breaking of the breaking portion 140', making even more difficult any gripping, and consequently its removal, on the locking device 14 itself.

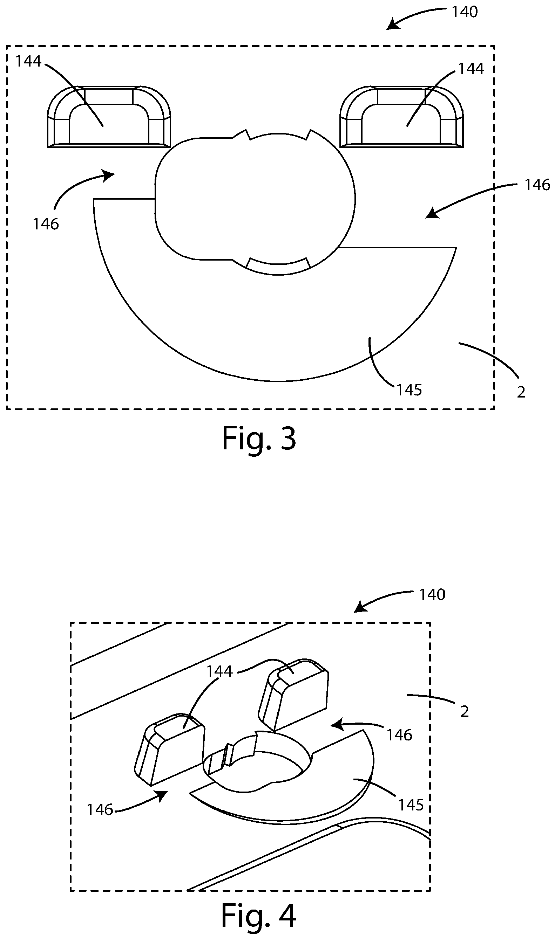

With reference to Figures 3 and 4 it is possible to notice how the through hole 140 allows said irreversible coupling, thanks in fact to its particular shape and to the presence of additional elements adjacent thereto, arranged on the rear face of the main body 2, in other words the face opposite to the face on which the license plate T is mounted.

In particular, in correspondence with the through hole 140 the following configuration can be provided: an abutting element 144, which in the embodiment consists of two parallelepiped-shaped projections 144, placed symmetrically relative to a central axis, parallel to a transverse z axis, of the eccentric hole 140, each with a flat side face and facing towards the first x axis of the main body 2, adapted to abut with the tooth 143 of the locking device 14.

Furthermore, this embodiment provides a ramp 145 placed, preferably parallel to said abutting elements 144, on the opposite side adjacent to said eccentric hole 140, always placed on the rear surface of the main body 2, said ramp 145 has a semi-circular shape, therefore forming an angle of 180°, starting from the initial edge (placed in correspondence with the surface of the main body 2) up to a terminal edge, which forms a step with the surface of the main body 2. The presence of said step in fact allows an indentation 146 to be created where the tooth 143 is adapted to fit following the installation of the locking device 14. The hole 140 preferably resembles the shape of the locking portion 14" deriving from a lower view (such as that of Figure 2b), to allow the locking portion 14" to be inserted by an operator, tilting the locking device for the insertion by an operator.

The insertion of the locking portion 14" must be carried out in such a way as to orient a specific portion of the tooth 143 at the start of the ramp 145, to allow it to slide on the ramp (following the application of a rotation of the stem 141). In fact, the tooth 143 of the locking device 14 preferably has a chamfered portion 147, which advantageously resembles the initial profile of the ramp 145, which actually allows the tooth 143 to easily slide on the surface of the ramp 145.

This chamfered surface 147 preferably occupies half the width of the tooth 143, ensuring that the interspace 146 between the start of the ramp and the abutting element 144 corresponds exactly to half the width of the tooth 143. Similarly, once the sliding of the tooth 143 on said ramp 145 has been completed, the interspace 146 between the terminal edge of the ramp 145 corresponds to the width of the tooth 143. This possible geometric arrangement advantageously allows a rigid joint on a plane parallel to the xy plane of the main body 2, constraining its horizontal movement. This constraint of the tooth 143 therefore allows constraining forces to be created, said actions on the breaking edge 140' together with the effect of the force applied on the gripping portion 14', cause it to break.

Therefore, the method for installing each locking device 14 on the main body 2 of the license plate holder device 1 according to the invention provides the following sequential steps:
a1) arrangement of a license plate T on the main body 2 of the license plate holder device 1;
a) insertion of said locking portion 14" of said locking device 14 into the respective through hole 140 on said main body 2 abutting on said license plate T, in particular with the large head or convex head 142 abutting on said license plate T for preventing the locking portion 14" from slipping out and for locking the license plate T in place;
b) rotation of said locking device 14 by means of said gripping portion 14', to couple said locking portion 14" by interlocking with said main body 2;
c) further rotation of said gripping portion 14' until causing the separation of said gripping portion 14' from said locking portion 14" of said locking device 14, in correspondence with said breaking edge 140'.

As can be seen from Figures 5 and 8, said license plate T is also provided with relative holes through which in the step a) the locking portion 14" of the locking device 14 is inserted. The through holes 140 on the main body 2 are arranged in correspondence with the holes of the respective license plate T to be inserted.

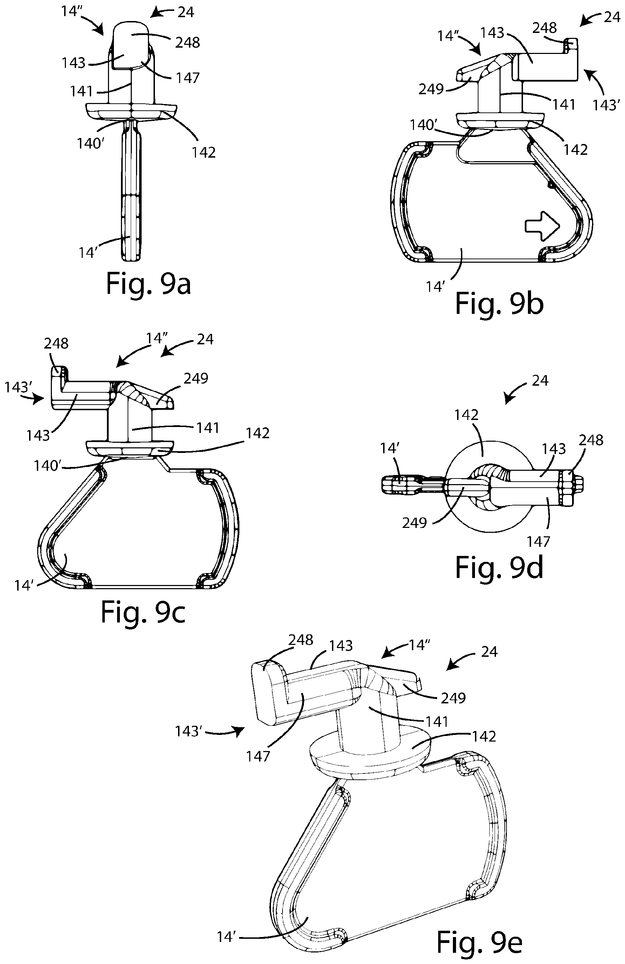

With reference to Figures 9a - 9e, a second embodiment of said locking device 24 for anchoring a license plate T to the license plate holder device 1 is shown according to a second embodiment similar to the first embodiment of Figure 1a, in correspondence with a corresponding number of through holes 140. The second embodiment of the locking device 24 differs from the first embodiment due to the presence of a protrusion 248 in a terminal portion of said tooth 143, oriented parallel to said stem 141, which forms a substantially "L"-shaped end portion 143' with said tooth 143. Furthermore, the locking device 24 according to the second embodiment differs due to the presence of a fin 249 placed on said terminal portion of the stem 141, opposite and oriented parallel to said tooth 143.

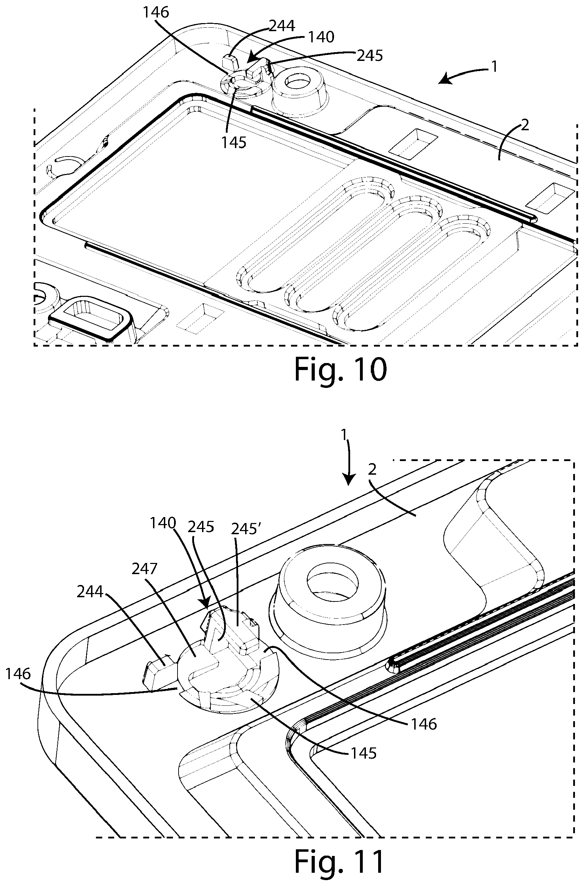

With reference to Figures 10 - 11 it is possible to notice how the second embodiment of the license plate holder device 1 further differs from the first embodiment due to the shape of the through hole 140 and to the geometry of the additional elements adjacent thereto, arranged on the rear face of the body main 2. In correspondence with the through hole 140, two different abutting elements are in fact provided: a first parallelepiped-shaped abutting element 244, and a second parallelepiped-shaped abutting element 245 comprising a projecting portion 245' placed above said parallelepiped-shaped portion and facing towards said eccentric hole 140. Said abutting elements 244, 245 are placed in correspondence with the eccentric hole 140, each with a flat side face facing towards the first x axis of the main body 2. Said tooth 143 of said locking element 24, similarly to the first embodiment, is adapted to abut with the second abutting element 245 during its rotation. In particular, said first abutting element 244 is placed spaced from said eccentric hole 140.

Furthermore, in the main body 2 of said license plate holder 1 according to the second embodiment, a depression 247 having a quarter-helicoidal development is provided, contiguous to said ramp 145 having a semi-circular shape and placed between said two abutting elements 244, 245, placed on the rear surface of the main body 2, which together with said ramp 145 forms a three-quarter circumference development, therefore forming an angle of 270°. Said depression 247 starts at an edge of said second abutting element 245 and ends at the start of said ramp 145.

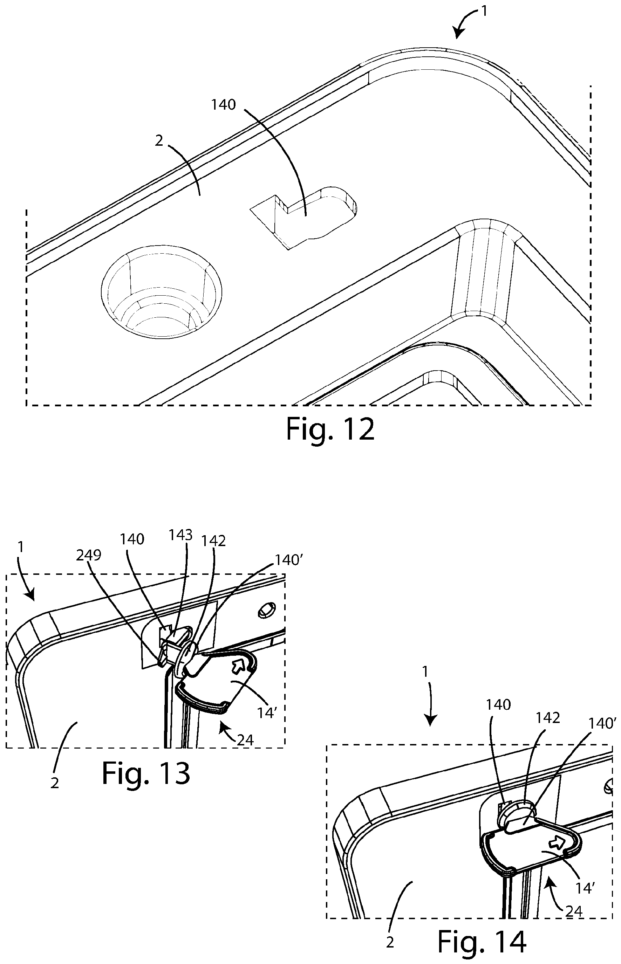

The presence of the fin 249 on said locking element 24 means that the installation method by an operator provides a step a2) before said step a), wherein the locking device 24, for being inserted into the eccentric hole 140, must be tilted towards the surface of said main body 2 from the side of said protrusion 248 of the locking device 24 itself, to then proceed with said step b), as visible in Figures 13 - 15.

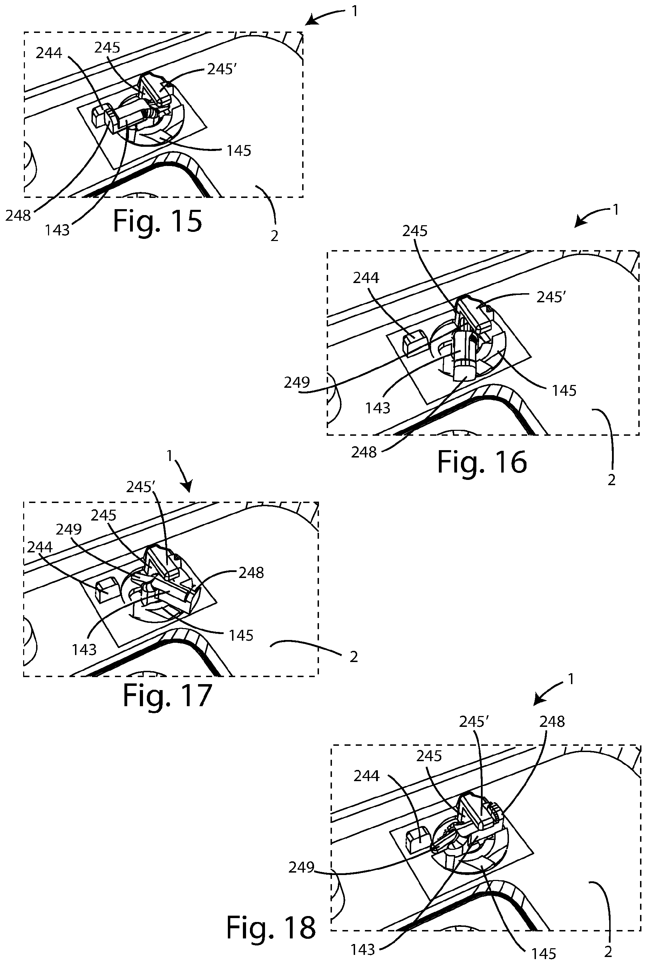

With reference to Figures 15 - 18, in fact, it is possible to notice how the fin 249 of said locking device 24 engages with said depression 247, being at the same time guided by said depression 247, thus favoring the sliding and centering of the tooth 143 on the ramp 145, and how, once said step b) of the method for installing the locking device 24 has been carried out, it prevents the relative rotation between the stem 141 (therefore the locking device 24) and the main body 2 along a direction parallel to said first x axis.

Furthermore, the substantially "L"-shaped portion 143' of the locking device 24, once said step b) of said installation method has been carried out, prevents the relative translation of said locking device 24 with said main body 2, since said substantially "L"-shaped portion 143' of said locking device 24 abuts with said protruding portion 245' of said second abutting element 245.

Furthermore, according to the invention, in order to reduce vibrations between said license plate holder device 1 and said vehicle or the license plate to be supported, the license plate holder device 1 can provide a plurality of anti-vibrating or anti-vibration devices 12. Furthermore, the main body 2 of the license plate holder device 1 can provide a plurality of through holes 120, each anti-vibrating device 12 being arranged in the respective through hole 120 in correspondence with one face of said main body 2. These anti-vibrating devices 12 can be provided also in other types of license plate holder devices 1, therefore not necessarily in the one described in the present embodiments, being sufficient that the license plate holder device 1 has at least one main body 2, preferably having a rectangular shape as previously described, and providing at least one or more through holes 120 for housing said anti-vibrating devices 12.

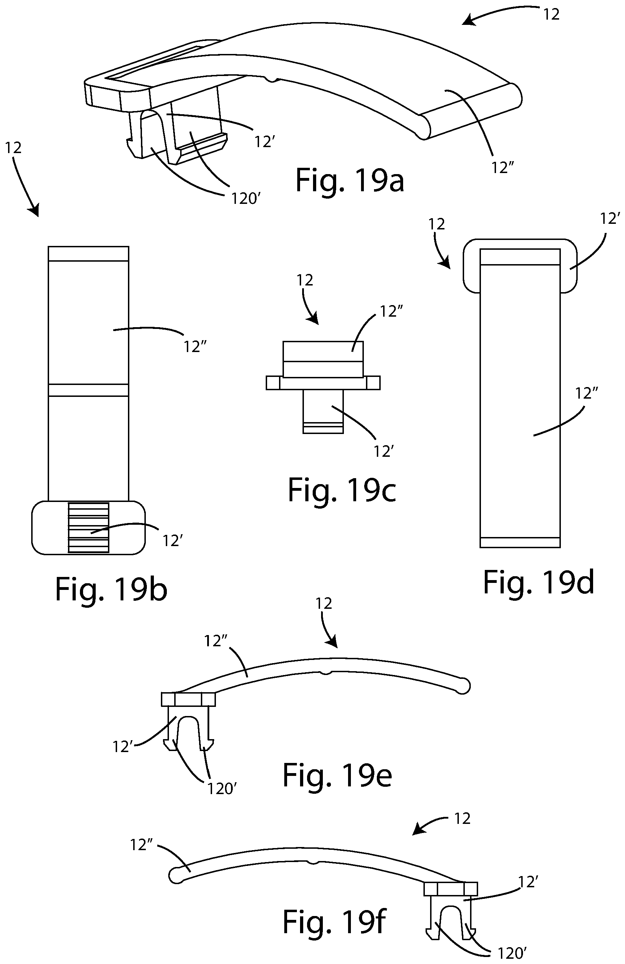

In particular, in Figures 19a - 19f a first embodiment of the anti-vibrating or anti-vibration device 12 is shown to reduce vibrations between the license plate holder device 1 and the bodywork of the vehicle on which it is mounted.

Each anti-vibrating device 12 can have a rigid body 12', adapted to be coupled to the respective through hole 120 obtained in the main body 2 of the license plate holder device 1 (as shown for example in Figure 1b), and an elastic arm 12" in the form of an arc of a circle rigidly joined to said rigid body 12' at one end thereof and having its concavity facing towards one face of said main body 2.

Each anti-vibration device 12 is coupled to the rear face of the main body 2, in other words the face that is fixed to the vehicle on which it is mounted.

Multiple anti-vibration devices 12 can be provided based on the shape and curvature of the front portion of the vehicle.

The elastic portion 12" in the form of an arc of a circle is placed with the convex portion facing towards the vehicle in such a way as to come into contact with it, flexing slightly relative to the rigid portion 12' that anchors to the main body 2 of the license plate holder device 1.

In other words, said anti-vibration device 12 acts as an anti-vibration clip.

Preferably, the through hole 120 obtained in said main body 2 can have a quadrangular shape or perimeter. Furthermore, the rigid body 12' of the anti-vibration device 12 can have a cubic volume conforming to said quadrangular through hole 120. This advantageously prevents the rotation of the anti-vibration device 12 relative to the hole 120 to which it is anchored.

In other words, the coupling between the anti-vibration device 12 and the main body 2 is an anti-rotational square coupling profile.

As can be seen from Figures 19a - 19f, the rigid anchoring body 12' of each anti-vibration device 12 can provide a pair of anchoring tabs 120' to rigidly anchor said anti-vibration device 12 to two opposite sides of said quadrangular hole 120 of said main body 2, improving its anchoring stability.

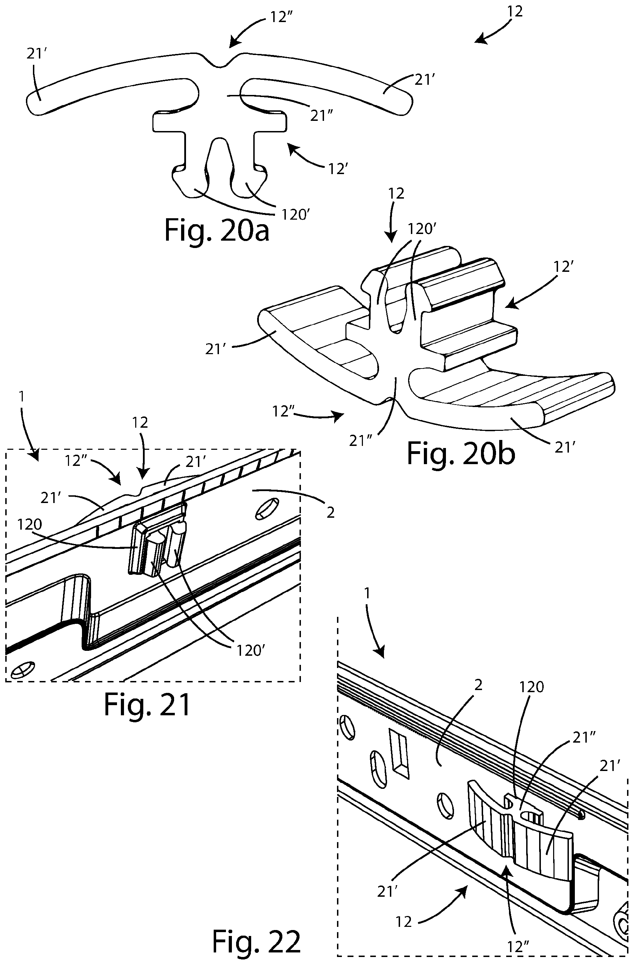

With reference to Figures 20a - 20b and Figures 21 and 22 it is possible to visualize the second embodiment of the anti-vibration device 12, whose elements in common with the first embodiment of the anti-vibration device 12 will be identified by the same numerical references.

This second embodiment differs from the first embodiment due to the different configuration of the elastic portion 12" connected to said rigid portion 12'. In fact, according to the invention, said elastic portion 12" consists of two elastic sub-portions 21', consisting of two arms 21', preferably equal to each other, rigidly joined to said rigid body 12' at their common end, in particular so as to join the rigid portion 12' of the anti-vibration device 12 with a central portion of said elastic portion 12". In particular, the elastic portion 12" can be in the form of an arc of a circle. In this second embodiment, said arms 21' are joined to said rigid portion 12' of said anti-vibration device 12 by means of a spacer 21", forming a single continuous body of the anti-vibrating device 12, advantageously spacing the rigid portion 12', by which the anti-vibrating device 12 is coupled to the license plate holder device 1, from the vehicle.

Advantageously, the license plate holder device according to the invention allows the license plate to be irreversible connected, thanks to this irreversible connection it is possible to fix a license plate, during installation of the license plate holder device on the bodywork of a vehicle, in such a way that said license plate cannot be easily removed once installed on said vehicle.

In the foregoing, the preferred embodiments have been described and variations of the present invention have been suggested, but it is to be understood that those skilled in the art will be able to make modifications and changes without thereby departing from the relevant scope of protection, as defined by the attached claims.

## Claims

1. A License plate holder device (1) including a main body (2), on which a plurality of through holes (140) are obtained, said main body (2) being adapted to be anchored to a vehicle and to support a license plate (T), said main body (2) having a first main development direction parallel to a first axis (x) and a second main development direction parallel to a second longitudinal axis (y), perpendicular to said first axis (x), said first axis (x) and second axis (y) defining a first plane (xy),
said license plate holder device (1) including a plurality of locking devices (14, 24), adapted to couple by interlocking with the respective through hole (140) on said main body (2) to rigidly constrain said license plate (T) to said license plate holder device (1), said license plate holder device (1) being **characterized in that** each of said locking devices (14, 24) has a gripping portion (14') and a locking portion (14"), connected to each other at a breaking edge (140'), wherein said breaking edge (140') has a cross section with a thickness smaller than said gripping (14') and locking (14") portions such that, during use, when the locking portion (14") is coupled by interlocking with the respective through hole (140) of said main body (2) through the action on said gripping portion (14'), said breaking edge (140') breaks, leaving the remaining body of the locking device (14) in place on said main body.

2. The license plate holder device (1) according to the preceding claim, wherein said at least one through hole of the main body (2) is an eccentric through hole (140), wherein said locking portion (14") of each locking device (14, 24) has a stem (141) culminating in a large head (142) and a tooth (143) protruding relative to said stem (141) adapted to be inserted into said eccentric through hole (140).

3. The license plate holder device (1) according to the preceding claim, wherein in correspondence with the rear face of said main body (2), for each eccentric hole (140), at least one abutting element (144, 244) is arranged adjacent to the respective eccentric hole (140) and a ramp (145) having a semi-helicoidal development arranged on the opposite side of said eccentric hole (140) and spaced therefrom by an interspace (146) such that, during use, when said locking portion (14") is inserted into said eccentric hole (140), through the rotation of the stem (141) said protruding tooth (143) slides on said ramp (145) until it fits into said interspace (146).

4. The license plate holder device (1) according to the preceding claim, wherein said protruding tooth (143) of each locking device (14, 24) has a chamfered portion (147) to facilitate sliding on said ramp (145).

5. The license plate holder device (1) according to claim 3 or 4, wherein the distance between the base of the ramp (145) and the abutting element (144, 244), in correspondence with each eccentric hole (140) on said main body (2), is less than the distance between the apex of the ramp (145) and the abutting element (144, 244), in particular the distances are equal.

6. The license plate holder device (1) according to any of the preceding claims, wherein the section of said breaking edge (140') is equivalent to between 20% - 25% of the section of said stem (141).

7. The license plate holder device (1) according to any one of the preceding claims, wherein said gripping portion (14') has a substantially two-dimensional and flat gripping surface, wherein said gripping surface (14') has at least two reinforced gripping edges, having a thickness greater than that of said gripping surface.

8. The license plate holder device (1) according to any one of claims 3-7, wherein said ramp (145) has a semi-circular shape, in particular an arc of a circle having an angle of 180° degrees, and wherein said abutting element (144) is arranged parallel and opposite, relative to said eccentric hole (140), to said initial and terminal edges of said ramp (145).

9. The license plate holder device (1) according to any one of claims 3-8, wherein in correspondence with the rear face of said main body (2), for each eccentric hole (140), it is further arranged
a second abutting element (245) adjacent to the respective eccentric hole (140), having a projecting portion (245') placed above said second abutting element (245), oriented parallel to said first plane (xy) of said main body (2) and facing and projecting onto said eccentric hole (140), and
wherein said locking device (24) further provides
a contiguous protrusion (248) perpendicular to said tooth (143) and parallel to said stem (141) of said locking device (24), adapted to create a substantially "L"-shaped end portion (143'),
so that, during use when said locking portion (14") of said locking device (24) is inserted into said eccentric hole (140), said substantially "L"-shaped end portion (143') abuts with the projecting portion (245') of said second abutting element (245) when said protruding tooth (243) is fitted into said interspace (146).

10. The license plate holder device (1) according to any one of claims 3-9, wherein in correspondence with the rear face of said main body (2), for each eccentric hole (140), it is further arranged
a depression (247) having a quarter-helicoidal development arranged between said abutting element (244) and said eccentric hole (140) adapted to form with said ramp (145) an arc of a circle having an angle of 270° degrees, and
wherein said locking device (24) further comprises
a fin (249) placed on said terminal portion of the stem (141), opposite and oriented parallel to said tooth (143),
such that, during use, when said locking portion (14") of said locking device (24) is inserted into said eccentric hole (140), said fin (249), by rotation of the stem (141), engages with said depression (247), to facilitate the sliding of said tooth (143) on said ramp (145).

11. A locking device (14, 24) for said license plate holder device (1) according to any one of the preceding claims.

12. Method for installing a locking device (14, 24) on the main body (2) of the license plate holder device (1) according to any one of claims 1 - 10, comprising the following sequential steps:
a1) arrangement of a license plate (T) on the main body (2) of the license plate holder device (1);
a) insertion of said locking portion (14") of said locking device (14, 24) into the respective through hole (140) on said main body (2) abutting on said license plate (T);
b) rotation of said locking device (14, 24) by means of said gripping portion (14'), to couple said locking portion (14") by interlocking with said main body (2);
c) further rotation of said gripping portion (14') until causing the separation of said gripping portion (14') from said locking portion (14") of said locking device (14, 24), in correspondence with said breaking edge (140').
